# EUROPEAN PATENT SPECIFICATION

(11) **EP 2 761 168 B1**
(45) Date of publication and mention of the grant of the patent: **22.05.2019**
(21) Application number: 12766077.7
(22) Date of filing: 26.09.2012
(51) Int. Cl.: F03D 80/70, F03D 1/06

(54) **BLADE CONNECTION FOR WIND TURBINE**
SCHAUFELVERBINDUNG FÜR EINE WINDTURBINE
RACCORD DE PALE POUR ÉOLIENNE

(30) Priority: 26.09.2011 GB 201116540
(43) Date of publication of application: 06.08.2014
(73) Proprietor: Innolith Assets AG, 4052 Basel (CH)
(72) Inventor: BORGEN, Eystein, N-5239 Rådal (NO); CARRON, William, N-5239 Rådal (NO)
(74) Representative: Durm Patentanwälte PartG mbB
(86) International application number: PCT/EP2012/068924
(87) International publication number: WO 2013/045472

(56) References cited:
- EP-A2- 2 045 464
- WO-A2-2010/040829
- US-A1- 2007 024 060

## Description

### Field of the Invention

The invention relates to wind turbines, and particularly to a blade connection for wind turbines. The invention is applicable to both offshore and onshore applications.

### Background of the Invention

It is known to position wind turbines both offshore (at sea) and onshore (on land) for the purpose of converting wind energy into other forms of energy, such as electrical energy. The applicant's earlier International Patent Application No. PCT/EP2009/063174 published under WO/2010/040829 describes wind turbines in which the present invention may be employed.

### Summary of the Invention

The invention provides a wind turbine as set out in the accompanying claims.

Embodiments of the invention will now be described, by way of example only, with reference to the accompanying drawings.

### Brief Description of the Figures

Figure 1 shows a wind turbine rotor which forms part of a wind turbine;
Figure 2 shows the central part of the wind turbine rotor, and shows three blade supports straddling a generator;
Figure 3 shows the connection of the blade rotor to the generator rotor of the wind turbine, in accordance with an embodiment of the invention;
Figure 4 shows the connection of a connection brace to the underside of a support plate of the wind turbine; and
Figure 5 is a side view of the connection brace shown in Figure 4.

### Description of Preferred Embodiments

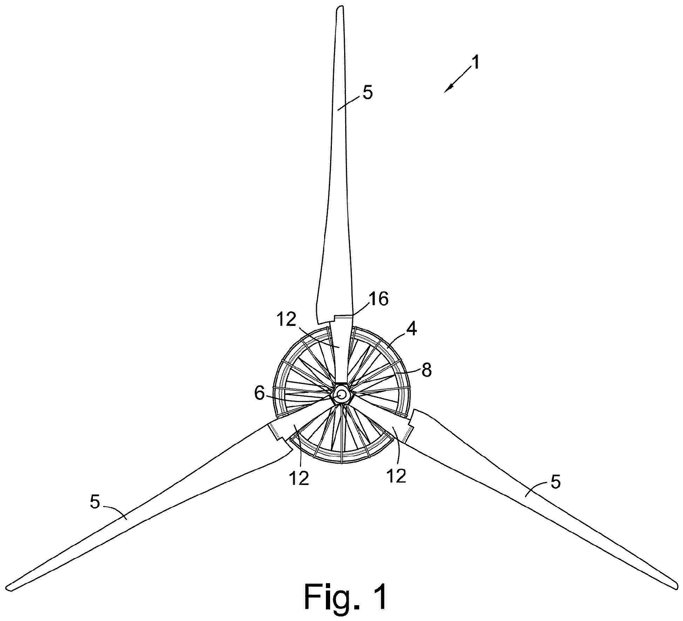

Figure 1 shows a wind turbine rotor 1 which is suitable for mounting on a wind turbine tower (not shown). The embodiment described is suitable for large wind turbines which may generate for example 5 to 10 megawatts of electricity, and where the weight of the rotor 1 may for example be in the range of 30 to 300 tonnes (ie. 30,000 to 300,000 Kg).

The main components of the wind turbine rotor 1 are a blade rotor 2, a generator rotor 4 and a stator 8. The blade rotor 2 comprises three blades 5 which are each supported by a blade support 12 as will be described below.

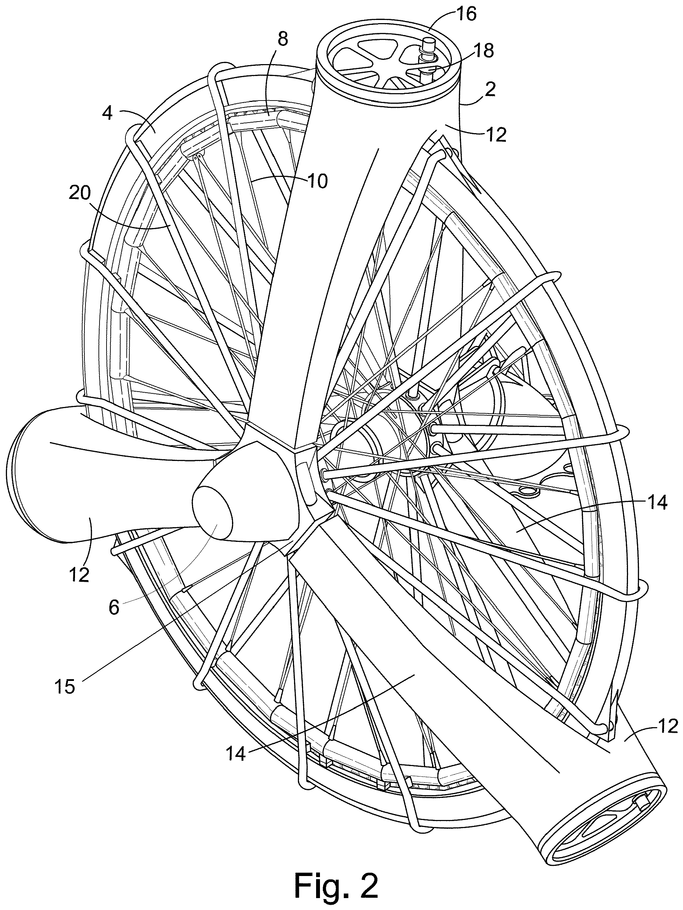

Figure 2 shows the central part of the wind turbine rotor 1. The blade rotor 2 and the generator rotor 4 are both rotatably mounted on a shaft 6. A stator 8 is supported by spokes 10, and does not rotate about the shaft 6. The generator rotor 4 and the stator 8 together form a generator which generates electricity.

The blade rotor 2 comprises three blades 5 (shown in Figure 1) which are supported by three blade supports 12. Each blade support 12 has two legs 14 which straddle the generator rotor 4 and the stator 8, and which are rotatably mounted on the shaft 6 at spaced positions. Two hubs 15 are provided, at spaced positions along the shaft 6, and each hub 15 supports the base of three of the legs 14.

Each blade support 12 is provided with a pitch bearing 16 which allows a blade 5 attached to the blade support 12 to be rotated by a pitch motor 18. This allows the pitch of each blade 5 to be adjusted to suit the current wind speed and power requirements. In alternative embodiments the pitch bearing 16 can be omitted, and the blades 5 could for example be integrally formed with the blade supports 12.

The generator rotor 4 is supported by a number of supporting members, which are arranged as a number of A-frames, and which are rotatably mounted on said shaft 6. The generator rotor 4 carries permanent magnets around its circumference. The stator 8 is provided with electrical windings which are positioned within the magnets of the generator rotor 4. Relative movement between the magnets of the generator rotor 4 and the electrical coils of the stator 8 generates electricity.

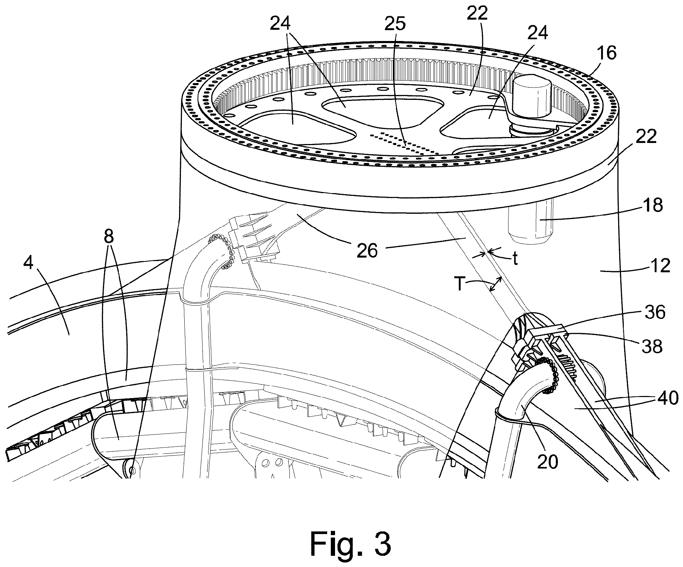

Figure 3 shows how each blade support 12 is connected to the generator rotor 4. As shown in Figure 3, below each pitch bearing 16 there is a support plate 22 which is fixed to the blade support 12 and which, unlike the pitch bearing 16, does not rotate relative to the blade support 12. The support plate 22 is provided with a number of gaps or apertures 24 which give it a greater degree of flexibility for translations out-of-plane of the plate as well as for rotations about any axis laying in the plane of the plate. The support plate serves to avoid ovalisation of the pitch bearing under load.

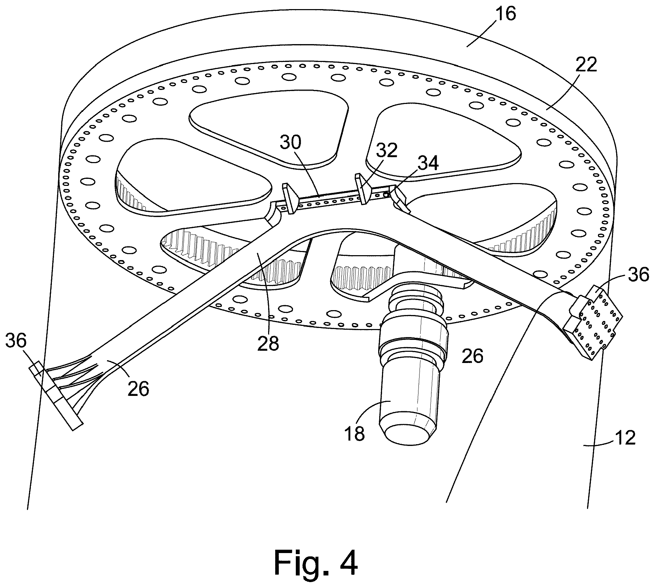

Beneath the support plate 22, two connection members 26 are connected between the centre 25 of the support plate 22 and the generator rotor 4. As shown in Figure 4, in the embodiment described, the two connection members 26 are integrally formed from a single connection brace 28, although this need not necessarily be so. The connection brace 28 is provided with a flange 30 at its centre, which is held in position by a number of flanges 32 on the underside of the support plate 22, and which is secured to the bottom of the support plate 22 for example by a number of bolts 34.

As shown in Figure 3, each connection member 26 is provided with a base plate 36 which is bolted to a corresponding mounting plate 38 on the generator rotor 4. The mounting plates 38 are each positioned at or adjacent to a pair supporting members 20 of the generator rotor 4 to provide extra strength and stability as well as guiding during installation. In the embodiment described, each mounting plate 38 is supported by a pair of generator plates 40 which are fixed to the top of an A-frame formed from the supporting members 20 of the generator rotor 4.

The operation of the connection members 26 will now be described. The connection members 26 connect the blade rotor 2 to the generator rotor 4, so that when the blade rotor 2 is rotated by wind acting on the blades (not shown), this rotation drives rotation of the generator rotor 4, and hence generates electricity. The connection members may also transmit some, or all, of the gravity loads from each blade via the generator rotor rim to the next blade and so on, so that the root bending moments at the hubs 15 caused by gravity loads on the blades are reduced or eliminated. Very large and variable forces in the wind direction may act on the blade rotor 2, as a result of varying wind speeds and directions. It is important that these large and variable forces which may bend the blades and blade supports are not transferred to the generator rotor 4 because a precise air gap must be maintained between the magnets of the generator rotor 4 and the electrical coils of the stator 8.

The connection members 26 are therefore arranged so that rotational torque on the blade rotor 2 is directly transferred to the generator rotor 4, but movement of the blade rotor 2 in other directions is not transferred to the generator rotor. There are six possible degrees of freedom for the movement of each blade support 12 relative to the generator rotor 4 (3 translations and 3 rotations). These correspond to movement, in either direction, along three perpendicular axes, namely movement parallel with the circumference of the generator rotor 4, movement parallel with the axis of the generator rotor 4, and movement in the radial direction, and rotations about all three axes.

We take translation along and rotation about each of these three axes in turn. The connection members 26 are connected to the generator rotor 4 at an angle of around 45 degrees, and for example between 20 and 60 degrees, relative to the tangent of the circumference of the generator rotor 4 at the centre of the blade support. In addition the connection members 26 are formed from a material, such as steel, which does not allow significant movement in compression or tension. As a result substantially no movement of the blade rotor 2 relative to the generator rotor 4 is permitted, in either direction, parallel to the circumference of the generator rotor 4. However, rotation of the blade rotor 2 relative to the generator 4 about the same axis is permitted as both the base plate 36 and the connection members 26 have flexibility for this rotation due to their flat profiles, which allow them to easily bend and twist. If only a single connection member is associated to each blade, the support plate 22 would have to carry the entire reaction load from the connection member in the radial direction. This would easily overload the support plate. By using two connection members the reaction force in the radial direction will be cancelled out due to the fact that when one connection member is in the tension the other connection member associated to the same blade will be in compression. The result is that the support plate 22 will not be pushed neither in or out to a great extent when the connection members 26 are carrying load.

We next consider movement of the blade rotor 2 in the radial direction. As mentioned above, the support plate 22 is provided with apertures 24 which give it a degree of flexibility. As a result the centre 25 of the support plate 22 is free to flex in either direction, thus allowing a degree of relative radial movement between the blade support 12 and the generator rotor 4. This prevents large radial forces from the blade rotor 2 being transmitted to the generator rotor 4. Rotation of the blade rotor 2 relative to the generator 4 about the same (radial) axis is permitted as the connection members 26 have flexibility for this rotation as well due to their flat profiles which allow them to easily bend and twist

We next consider movement of the blade rotor 2 parallel with the rotational axis of the generator rotor 4. Each of the connection members 26 is designed so as to be flexible in this direction. From Figure 3 it can be seen that each connection member 26 has a thickness "t" measured parallel with the axis of rotation, which is small compared to its thickness "T" measured in the plane of the generator rotor 4. Preferably T is at least two or three times the value of t. The connection members 26 are therefore able to flex in the direction parallel with the axis of rotation (of either the generator rotor 4 or blade rotor 2), which allows a degree of relative movement between the blade rotor 2 and the generator rotor 4, in either direction, parallel with the axis of rotation. Rotation of the blade rotor 2 relative to the generator 4 about the same axis is permitted as the support plate 22 has flexibility for this rotation due to its flat profile. That is, the support plate 22 is "floppy" for rotations about any axis laying along its own plane.

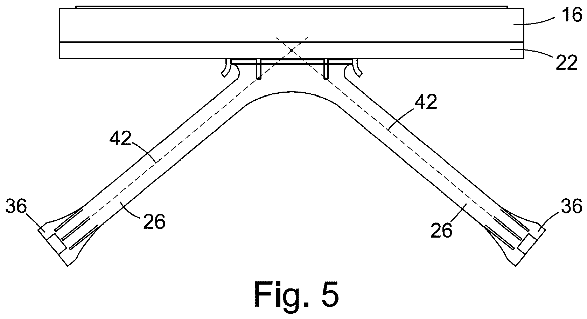

Figure 5 is a side view showing the two connection members 26 of the connection brace 28. It can be seen that the connection brace 28 has a "wish bone" shape, or the shape of a "Y" with a somewhat truncated base, where the base is pointing outwards away from the axis of rotation of the rotor, or the shape of an "A" with a somewhat truncated top, where the top is pointing outwards away from the axis of rotation of the rotor. In Figure 5 the central axis 42 of each connection member 26 is shown as a dashed line, and it can be seen that these two axes intersect each other at or near the centre of the support plate 22. In addition to intersecting at the centre 25 of the support plate 22, the two axes 42 also intersect at the centre of the thickness of the support plate 22. This is important to ensure that the potentially large forces acting on the support plate 22, via the connection members 26, do not impose a bending moment in the support plate 22 which could cause an unnecessary twisting of the support plate 22.

The connection brace 28 may be metal, and may for example be formed from forged steel. It will be appreciated that variations are possible. For example the two connection members 26 may be two separate members, or alternatively may be formed as a single connection brace 28, the two connection brace 28 may be generally A-shaped (as shown) or may be formed as a single triangular plate.

## Claims

1. A wind turbine rotor (1) comprising:
a blade rotor (2) comprising a number of blades (5) arranged to cause rotation when exposed to wind; and
a generator comprising a generator rotor (4) and a stator (8);
said wind turbine (1) further comprising connection means connecting said blade rotor (2) to said generator rotor (4) and arranged to transfer torque from said blade rotor (2) to said generator rotor (4), wherein said connection means comprises two connection components (26) associated with each blade (5) and said two connection components (26) are arranged so that, when the connection means transfers torque from the blade rotor (2) to the generator rotor (4), one of said two connection components (26) is in compression while the other of said two connection components (26) is simultaneously under tension,
**characterised in that** each of said two connection components (26) is an elongate member which has a thickness in one direction which is at least twice the thickness in a perpendicular direction, so that each connection component (26) is flexible in one direction but not in a perpendicular direction.

2. A wind turbine rotor as claimed in claim 1, wherein said two connection components (26) are two separate connection members.

3. A wind turbine rotor as claimed in claim 1, wherein said two connection components (26) are integrally formed.

4. A wind turbine rotor as claimed in claim 3, wherein said two connection components (26) are part of a triangular, or generally triangular, plate, where one side of the triangular plate acts as one of said two connection components and another side of the triangular plate acts as the other of said two connection components.

5. A wind turbine as claimed in any preceding claim, wherein each of said two connection components (26) is attached to the blade rotor (2) in such a way as to allow some radial movement of the blade rotor (2) relative to said two connection components (26).

6. A wind turbine rotor as claimed in claim 5, wherein said relative radial movement is at least 2mm of radial movement for a turbine (1) with a rotor diameter of approximately 150m.

7. A wind turbine rotor as claimed in any preceding claim, wherein each of said two connection components (26) is connected to a support plate (22) mounted within a portion of said blade rotor.

8. A wind turbine rotor as claimed in claim 7, wherein said support plate (22) is arranged so that it lies in a plane which is perpendicular, or generally perpendicular, to the longitudinal axis of the corresponding blade (5).

9. A wind turbine rotor as claimed in claim 7 or 8, wherein said support plate (22) also acts as a stiffener plate for a blade pitch bearing (16).

10. A wind turbine rotor as claimed in any one of claims 7 to 9, wherein said support plate (22) is mounted on a blade support structure (12) which supports the corresponding blade (5).

11. A wind turbine rotor as claimed in any one of claims 7 to 10, wherein the two connection components (26) are arranged as an A-frame where the apex of the A-frame is connected to the support plate (22) and the two other ends of the A-frame are connected to the generator rotor (4).

12. A wind turbine rotor as claimed in claim 11, wherein the apex of the A-frame is connected to, or adjacent to, the centre of the support plate (22).

13. A wind turbine rotor as claimed in any one of claims 7 to 12, wherein said support plate (22) is provided with a number of apertures (24) to increase its out-of-plane flexibility.

14. A wind turbine rotor as claimed in any one of claims 7 to 13, wherein each of said two connection components (26) has a central longitudinal axis, and said two central longitudinal axes intersect at, or adjacent to, the centre of thickness of said support plate (22).

15. A wind turbine rotor as claimed in any preceding claim, wherein said generator rotor (4) is provided with a number of radial supports (20), and each of said two connection components (26) is attached to the generator rotor (4) at or adjacent at least one of said radial supports (20).

## Patentansprüche

1. Windturbinenrotor (1) umfassend:
einen Schaufelrotor (2), umfassend eine Anzahl von Schaufeln (5), welche so angeordnet sind, dass sie eine Drehung erzeugen, wenn sie einem Wind ausgesetzt sind; und
einen Generator, umfassend einen Generatorrotor (4) und einen Stator (8);
wobei die Windturbine (1) ferner ein Verbindungsmittel umfasst, welches den Schaufelrotor (2) mit dem Generatorrotor (4) verbindet und welches angeordnet ist, um ein Drehmoment vom Schaufelrotor (2) an den Generatorrotor (4) zu übertragen, wobei das Verbindungsmittel zwei Verbindungskomponenten (26) umfasst, welche jeder Schaufel (5) zugeordnet sind, und wobei die zwei Verbindungskomponenten (26) so angeordnet sind, dass, wenn das Verbindungsmittel ein Drehmoment vom Schaufelrotor (2) an den Generatorrotor (4) übertragen, eine der zwei Verbindungskomponenten (26) einer Druckspannung ausgesetzt ist, während die andere der zwei Verbindungskomponenten (26) gleichzeitig unter einer Zugspannung steht,
**dadurch gekennzeichnet, dass** jede der zwei Verbindungskomponenten (26) ein längliches Element ist, welches eine Dicke in einer Richtung aufweist, welche zumindest zweimal so groß ist wie die Dicke in einer senkrechten Richtung, sodass jede Verbindungskomponente (26) in einer Richtung, aber nicht in einer senkrechten Richtung, flexibel ist.

2. Windturbinenrotor nach Anspruch 1, wobei die zwei Verbindungskomponenten (26) zwei getrennte Verbindungselemente sind.

3. Windturbinenrotor nach Anspruch 1, wobei die zwei Verbindungskomponenten (26) einstückig geformt sind.

4. Windturbinenrotor nach Anspruch 3, wobei die zwei Verbindungskomponenten (26) Teil einer dreieckigen, oder im Wesentlichen dreieckigen, Platte sind, wobei eine Seite der dreieckigen Platte als eine der zwei Verbindungskomponenten fungiert und eine andere Seite der dreieckigen Platte als die andere der zwei Verbindungskomponenten wirkt.

5. Windturbine nach einem der vorhergehenden Ansprüche, wobei jede der zwei Verbindungskomponenten (26) an dem Schaufelrotor (2) so befestigt ist, dass sie eine gewisse radiale Bewegung des Schaufelrotors (2) relativ zu den zwei Verbindungskomponenten (26) zulässt.

6. Windturbinenrotor nach Anspruch 5, wobei die relative radiale Bewegung zumindest einer radialen Bewegung von 2 mm im Falle einer Turbine (1) mit einem Rotordurchmesser von etwa 150 m entspricht.

7. Windturbinenrotor nach einem der vorhergehenden Ansprüche, wobei jede der zwei Verbindungskomponenten (26) mit einer Trägerplatte (22) verbunden ist, welche innerhalb eines Abschnitts des Schaufelrotors montiert ist.

8. Windturbinenrotor nach Anspruch 7, wobei die Trägerplatte (22) so angeordnet ist, dass sie in einer Ebene liegt, welche zur Längsachse der entsprechenden Schaufel (5) senkrecht, oder im Wesentlichen senkrecht steht.

9. Windturbinenrotor nach Anspruch 7 oder 8, wobei die Trägerplatte (22) auch als Versteifungsplatte für ein Schaufelanstellwinkellager (16) wirkt.

10. Windturbinenrotor nach einem der Ansprüche 7 bis 9, wobei die Trägerplatte (22) auf einer Schaufelträgerstruktur (12) montiert ist, welche die entsprechende Schaufel (5) trägt.

11. Windturbinenrotor nach einem der Ansprüche 7 bis 10, wobei die zwei Verbindungskomponenten (26) einen A-Rahmen bilden, wobei die Spitze des A-Rahmens mit der Trägerplatte (22) verbunden ist und die anderen zwei Enden des A-Rahmens mit dem Generatorrotor (4) verbunden sind.

12. Windturbinenrotor nach Anspruch 11, wobei die Spitze des A-Rahmens mit dem Mittelpunkt der Trägerplatte (22) verbunden oder an diesen angrenzend angeordnet ist.

13. Windturbinenrotor nach einem der Ansprüche 7 bis 12, wobei die Trägerplatte (22) mit einer Anzahl von Öffnungen (24) ausgestattet ist, um ihre ebenverschobene Flexibilität zu erhöhen.

14. Windturbinenrotor nach einem der Ansprüche 7 bis 13, wobei jede der zwei Verbindungskomponenten (26) eine mittlere Längsachse aufweist und die zwei mittleren Längsachsen einander am oder nahe am Mittelpunkt der Dicke der Trägerplatte (22) schneiden.

15. Windturbinenrotor nach einem der vorhergehenden Ansprüche, wobei der Generatorrotor (4) mit einer Anzahl von radialen Trägern (20) versehen ist und jede der zwei Verbindungskomponenten (26) am Generatorrotor (4) an oder nahe an zumindest einem der radialen Träger (20) befestigt ist.

## Revendications

1. Rotor d'éolienne (1) comprenant :
un rotor de pale (2) comprenant un certain nombre de pales (5) agencées pour amener une rotation lorsqu'elles sont exposées au vent ; et
un générateur comprenant un rotor de générateur (4) et un stator (8) ;
ladite éolienne (1) comprenant en outre des moyens de raccordement raccordant ledit rotor de pale (2) audit rotor de générateur (4) et agencés pour transférer un couple dudit rotor de pale (2) audit moteur de générateur (4), dans laquelle lesdits moyens de raccordement comprennent deux composants de raccordement (26) associés à chaque pale (5) et lesdits deux composants de raccordement (26) sont agencés de sorte que, lorsque les moyens de raccordement transfèrent un couple du rotor de pale (2) au rotor de générateur (4), l'un des deux composants de raccordement (26) est sous compression tandis que l'autre desdits deux composants de raccordement (26) est simultanément sous tension,
**caractérisé en ce que** chacun desdits deux composants de raccordement (26) est un élément allongé qui a une épaisseur dans une direction qui est au moins le double de l'épaisseur dans une direction perpendiculaire, de sorte que chaque composant de raccordement (26) est flexible dans une direction mais pas dans une direction perpendiculaire.

2. Rotor d'éolienne selon la revendication 1, dans lequel lesdits deux composants de raccordement (26) sont deux éléments de raccordement séparés.

3. Rotor d'éolienne selon la revendication 1, dans lequel lesdits deux composants de raccordement (26) sont formés d'un seul tenant.

4. Rotor d'éolienne selon la revendication 3, dans lequel lesdits deux composants de raccordement (26) font partie d'une plaque triangulaire, ou globalement triangulaire, où un côté de la plaque triangulaire agit en tant que l'un desdits deux composants de raccordement et un autre côté de la plaque triangulaire agit en tant que l'autre desdits deux composants de raccordement.

5. Eolienne selon l'une quelconque des revendications précédentes, dans laquelle chacun desdits deux composants de raccordement (26) est fixé au rotor de pale (2) de manière à permettre un certain mouvement radial du rotor de pale (2) relatif auxdits deux composants de raccordement (26).

6. Rotor d'éolienne selon la revendication 5, dans lequel ledit mouvement radial relatif est au moins 2 mm du mouvement radial pour une turbine (1) avec un diamètre de rotor d'approximativement 150 m.

7. Rotor d'éolienne selon l'une quelconque des revendications précédentes, dans lequel chacun desdits deux composants de raccordement (26) est raccordé à une plaque de support (22) montée à l'intérieur d'une section dudit rotor de pale.

8. Rotor d'éolienne selon la revendication 7, dans lequel ladite plaque de support (22) est agencée de sorte qu'elle repose dans un plan qui est perpendiculaire, ou globalement perpendiculaire, à l'axe longitudinal de la pale (5) correspondante.

9. Rotor d'éolienne selon la revendication 7 ou 8, dans lequel ladite plaque de support (22) agit également en tant que plaque de raidissement pour un palier de pas de pale (16).

10. Rotor d'éolienne selon l'une quelconque des revendications 7 à 9, dans lequel ladite plaque de support (22) est montée sur une structure de support de pale (12) qui supporte la pale (5) correspondante.

11. Rotor d'éolienne selon l'une quelconque des revendications 7 à 10, dans lequel les deux composants de raccordement (26) sont agencés en tant qu'armature en A où le sommet de l'armature en A est raccordé à la plaque de support (22) et les deux autres extrémités de l'armature en A sont raccordées au rotor de générateur (4).

12. Rotor d'éolienne selon la revendication 11, dans lequel le sommet de l'armature en A est raccordé, ou adjacent, au centre de la plaque de support (22).

13. Rotor d'éolienne selon l'une quelconque des revendications 7 à 12, dans lequel ladite plaque de support (22) est dotée d'un certain nombre d'ouvertures (24) pour augmenter sa flexibilité hors plan.

14. Rotor d'éolienne selon l'une quelconque des revendications 7 à 13, dans lequel chacun des deux composants de raccordement (26) a un axe longitudinal central, et lesdits deux axes longitudinaux centraux se croisent au niveau du, ou de manière adjacente au, centre de l'épaisseur de ladite plaque de support (22).

15. Rotor d'éolienne selon l'une quelconque des revendications précédentes, dans lequel ledit rotor de générateur (4) est doté d'un certain nombre de supports radiaux (20), et chacun desdits deux composants de raccordement (26) est fixé au rotor de générateur (4) au niveau de ou de manière adjacente à au moins l'un desdits supports radiaux (20).
